# EUROPEAN PATENT SPECIFICATION

(11) **EP 1 777 259 B1**
(45) Date of publication and mention of the grant of the patent: **29.06.2011**
(21) Application number: 06122785.6
(22) Date of filing: 24.10.2006
(51) Int. Cl.: C08K 9/08, C08L 9/00, C08L 55/02, C08J 9/00

(54) **Carbon nanotubes reinforced polymers and production process therefor**
Kohlenstoffnanoröhrchen verstärkte Polymerzusammensetzung und Verfahren zu deren Herstellung
Polymères renforcés par des nanotubes de carbone et leurs procédés de production

(30) Priority: 24.10.2005 EP 05023137
(43) Date of publication of application: 25.04.2007
(73) Proprietor: BASF SE, 67056 Ludwigshafen (DE)
(72) Inventor: Duijzings, Wil, 6121, Born (NL); Suwier, Davy, Roger, 68161, Mannheim (DE); Breiner, Thomas, 64646, Heppenheim (DE); Warzelhan, Volker, 67273, Weisenheim (DE); Pepers, Michel, 67071, Ludwigshafen (DE); Niessner, Norbert, 67159, Friedelsheim (DE)

(56) References cited:
- WO-A-2004/072159
- WO-A2-2005/108485
- US-A- 2 930 775

## Description

The invention relates to a process for producing carbon nanotubes reinforced polymers.

Carbon nanotubes (CNTs) are self-assembled coaxial cylindrical graphene sheets of sp² hybridized carbon atoms. Due to their tubular structure, large aspect ratio (length vs. diameter, AR) and electrical conductance, they have interesting mechanical and electronic properties.

There are two types of CNTs, multi-walled carbon nanotubes (MWCNTs) and single-walled carbon nanotubes (SWCNTs).

In recent years, much effort has been put into the incorporation of CNTs in polymer matrices. The composites obtained are interesting materials, since they have enhanced electrical and mechanical properties at very low loading due to the specific nanotube characteristics, such as their high aspect ratio and electrical conductance. However, dispersion of CNTs in highly viscous polymers is difficult and has often been attempted by functionalizing the nanotubes, leading to attractive interactions between the nanotubes and the polymer. In addition, dispersing exfoliated single nanotubes has been found to be a challenge, since nanotubes are highly bundled as a result of strong van-der-Waals interactions.

CNT reinforced polymers are presently made by incorporating CNTs, generally in the form of a bundle, into a polymer matrix. In order to obtain a homogeneous distribution of these CNTs, they are pre-treated by either an ultrasonic treatment, or by a chemical modification process, aimed at improving the dispersability of the individual CNT in the polymer matrix (WO 2004/046031).

The incorporation of CNTs in such a polymeric matrix is for the enhancement of the stiffness as well as the conductivity of the polymer matrix material. The reported procedures for obtaining homogeneous dispersions of CNTs in polymer matrices may result in either breaking and lowering of the aspect ratio of the tubes (which is unfavorable for stiffness, strength, and conductivity of the composite), or in damaging the surface of the tubes (which lowers the stability and the conductivity of the tubes).

In J. Mater. Sci. 37 (2002) 3915-23, a process is described for the preparation of a poly (styrene/butyl acrylate) copolymer nano composite using CNTs as filler. This process uses MWCNTs, suspended in an aqueous solution of sodium dodecyl sulphate (SDS), and a latex of the copolymer. An amount of at least 3 wt.% of the MWCNT is needed to have a significant change in the electrical conductivity of the nanocomposite (the so-called percolation threshold).

In WO 2002/076888, a method for the exfoliation of CNTs and a method for the preparation of a stable aqueous suspension thereof by adding a water soluble polymer, such as gum Arabic, carrageenan, pectin, polygalacturonic acid, alginic acid and chitosan, is disclosed. In this document it also disclosed that other surfactants, such as cetyl trimethyl ammonium chloride, dodecyltrimethylammonium bromide, penta oxyethylene dodecylether, dextrine, polyethylene oxide (MW about 300,000) are not efficient as dispersing agents for CNTs in aqueous solutions.

In WO 2004/072159, a process for preparing a CNT reinforced polymer is disclosed, which comprises the step of contacting CNTs in an aqueous medium with either a water soluble polymer or a water soluble surfactant.

Although good results have been achieved with the cited processes, there is still room for substantial improvements.

Since SWCNTs are very expensive, there is need for further lowering of the perconation threshold. Further, it is of advantage if in one dispersion step all the nanotubes can be dispersed, so the separation of non dispersed bundles by a centrifuging step can be omitted.

Further, adding of surfactants or low molecular weight water soluble polymers results in a decrease of the glass transition temperature of the polymer composite. Since most systems are in the class of engineering plastics, this is potentially a substantial disadvantage.

It is an object of the invention to avoid or reduce these disadvantages of the known CNT-reinforced polymers.

It has been found that CNT-reinforced polymers with excellent properties can be obtained by adding a water soluble salt of an amphiphilic polymer to the aqueous medium in the dispersing step of the CNTs.

Accordingly, in one aspect of the invention there is provided a process for the preparation of a CNT reinforced polymer, comprising the steps of
A. contacting CNTs in an aqueous medium with a water soluble salt of an amphiphilic polymer,
B. mixing the dispersion obtained in step (A) with an aqueous latex of a second polymer ("matrix polymer") or one or more water soluble precursor of a second polymer ("matrix polymer"),
C. removing water from the mixture obtained in step (B),
D. heating the product obtained in step (C) to a temperature at which the matrix polymer flows or where the matrix polymer is formed out of its precursors, and, optionally,
E. processing and/or solidifying the product of step (D) in a desired form.

CNT reinforced polymers obtainable according to the invention show excellent stiffness and conductivity properties. They have particularly low percolation values.

Suitable CNTs employed in the present invention are, e.g., commercial products which can be obtained, e.g., as HiPCO^{®} from Carbon Nanotechnologies, Inc. (Houston, USA) or Carbolex^{®} from CarboLex, Inc. (Lexington, KY, USA). In general, they can be used without further preparation or purification. Single walled CNTs (SWCNTs) are preferred.

The expression "amphiphilic polymer" as used herein means a polymer or oligomer comprising hydrophobic and hydrophilic segments and acting as a surfactant, i.e. lowering the surface tension of water. The amphiphilic polymer comprises one or more groups which are able to form a salt in an aqueous medium.

The amphiphilic polymer can be anionic, cationic or amphoteric.

Water solubility as used herein means that the salt of the amphiphilic polymer is soluble in the reaction medium. Preferably, water solubility means a solubility of at least 1 g/l, more preferred 10 g/l, in particular 50 g/l at 25°C.

In a preferred embodiment, the amphiphilic polymer is at least partially, more preferred homogeneously, miscible with the second polymer which constitutes the matrix of the reinforced polymer, in which the CNTs are well-dispersed.

In a further preferred embodiment, the amphiphilic polymer is a linear polymer, i.e. it is not branched or crosslinked.

In a further preferred embodiment, the amphiphilic polymer is a synthetic polymer, more preferred a synthetic polymer obtained from hydrophobic and hydrophilic monomers.

In a further preferred embodiment, the amphiphilic polymer is a copolymer, for example an alternating or random copolymer or block copolymer, which can be prepared by known polymerization reactions, for example by radical or anionic polymerization, by polycondensation reactions, such as by reaction of end-functionalized oligomeric or comb polymers, which polymers may be prepared e.g. by graft reaction. Block polymers are, for example, diblock copolymers (A-B type) or triblock copolymers (A-B-A or A-B-C type) and so called tapered structures.

Preferred examples of building blocks for the amphiphilic polymer are:
vinyl aromatic monomers, such as styrene and styrene derivatives of the formula (I), 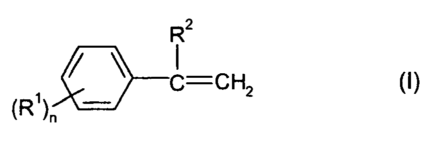 where R¹ and R² are, independently, hydrogen or C₁-C₈-alkyl and n is 0, 1, 2 or 3;
   methacrylonitrile, acrylonitrile;
   nitrogen-functional monomers, such as dimethylaminoethyl acrylate, diethylaminoethyl acrylate, vinylimidazole, vinylpyrrolidone, vinylcaprolactam, vinylcarbazole, vinyl aniline, acryl amide;
   C₁-C₁₀-alkylacrylates, such as methyl acrylate, ethyl acrylate, n-propyl acrylate, isopropyl acrylate, n-butyl acrylate, isobutyl acrylate, sec-butyl acrylate, tert-butyl acrylate, ethylhexyl acrylate, and the corresponding C₁-C₁₀-alkyl methacrylates, and hydroxyethyl acrylate;
   aromatic and araliphatic (meth)acrylates, such as phenyl acrylate, phenyl methacrylate, benzyl acrylate, benzyl methacrylate, 2-phenylethyl acrylate, 2-phenylethyl methacrylate, 2-phenoxyethyl acrylate and 2-phenoxyethyl methacrylate;
   N-substituted maleimides, such as N-methyl-, N-phenyl- and N-Cyclohexylmaleimide;
   unsaturated ethers, such as vinyl methyl ether, and
   acrylic acid, methacrylic acid, and also dicarboxylic acids, such as maleic acid and fumaric acid and their anhydrides, such as maleic anhydride.

A water soluble salt of these polymers can for example be prepared by saponification of the above mentioned polymers with basic compounds. Preferred are monovalent salts, like the Na, K, Li and NH₄ salts with NH₄ salts being particularly preferred. Also mixtures are possible. The saponification can for example be carried out with NaOH, KOH, LiOH or NH₄OH.

In a preferred embodiment, the salt of the amphiphilic polymer is the salt of an alternating styrene maleic anhydride (SMA) copolymer, the ammonium salt being particularly preferred.

Preferably, the water soluble salt of the amphiphilic polymer has a molecular weight (Mw) of at least 1,000, more preferred at least 5,000, particularly preferred at least 10,000. For practical purposes, the upper limit is generally 150,000, preferably 75,000, more preferred 50,000.

Step (A) is performed by contacting the essential ingredients (the water-soluble salt of the amphiphilic polymer and the CNTs) in any order in water or an aqueous solution.

The resulting product generally contains up to 75% by weight of CNTs, coated with the said water-soluble salt of the amphiphilic polymer. In this process step (A), the mass ratio of the water-soluble salt of the amphiphilic polymer to the CNTs is preferably in the range of from 0.05 to 20.

The temperature at which this step (A) is performed is not critical, e.g., temperatures between room temperature and 75°C are very well suited.

The residence time needed for an effective exfoliation of the CNTs can be easily determined by a man skilled in the art. Residence times below one hour have proven to be sufficient for that purpose.
As a result of process step (A), the CNTs are well dispersed in the aqueous medium. Well dispersed in the aqueous medium means that the CNTs are substantially homogeneously distributed (i.e., allowing for a 1 to 20 percent, preferably 1 to 5 percent inhomogeniety in the aqueous medium without phase separation. Preferably, a majority of the well dispersed CNTs are not bundled together. Preferably, about 60%, more preferably about 80%, most preferably about 90% of the well-dispersed CNTs are not bundled together.

The dispersion resulting from step (A) is brought into contact with either an aqueous latex of a second polymer ("matrix polymer"), or with (a) water-soluble precursor(s) of a second polymer ("matrix polymer"). This second polymer is the polymer which constitutes the matrix of the CNTs reinforced polymer, in which the CNTs are well-dispersed. In principle, any matrix aqueous polymer latex known to the skilled man can be used.

Matrix polymers that are contemplated by an embodiment of the invention include, without limitation, a polyamide, polyester, polyurethane, polysulfonamide, polycarbonate, polyurea, polyphosphonoamide, polyarylate, polyimide, poly(amic ester), poly(ester amide), a poly(enaryloxynitrile) or mixtures thereof.

In another embodiment, the matrix polymer is a sulfur-containing polymer (e.g., an aromatic polydithiocarbonate or polythiocarbonate) or a liquid crystalline(LC) thermotropic main-chain polyester or copolyester.

In still another embodiment, the matrix polymer is a poly(ester amide) related to nylons and polyesters 6,10 or 12,10. For example, poly(ester amide)s may comprise copolymers, such as poly(butylene adipate)-co-(amino caproate).

In yet another embodiment, the matrix polymer is an aromatic-aliphatic poly(enaminonitrile) (PEAN), a cross-linked polyamide or polyester, a fluorine-containing, methylene-bridged aromatic polyester or a blue luminescent polyether.

In still another embodiment, the derivatized matrix polymer is selected from the group of the following polymers or mixed polymers: polycarbonate/polybutylene terephthalate (PC/PBT), polycarbonate/polyethylene terephthalate (PC/PBT), polycarbonate/polyethylene terephthalate (PC/PET), polyamide (PA) reinforced with modified polyphenylene ether (PPE), polyphenylene sulphide (PPS), polybutylene terephthalate (PBT), polyethylene terephthalate (PET), polyetherimide, expandable polystyrene poly(2,6-dimethyl-1,4-phenylene ether (PPE), modified polyphenylene ether (PPE), polycarbonate (PC), acrylic-styrene-acrylonitrile (ASA), polycarbonate/acrylonitrile-butadiene-styrene (PC/AILS) and acrylonitrile-butadiene-styrene (ABS) or mixtures thereof.
Preference is given to a polymer being selected from the group of polyacrylates, styrene-based (co-)polymers, butadiene-based (co-)polymers, polycarbonate, acrylonitrile-based (co-)polymers, (halogen-containing) polyolefins (like polyethylene or polypropylene), and polyamides. Furthermore, above mentioned polymer matrices can contain rubbery polymers with a Tg < 0 C as impact modifiers. Examples are butadiene and acrylate-based (co)-polymers, EP(DM) and silicon rubbers. It is also possible to combine more than one of the above mentioned polymers to obtain so called blends. Also one or more precursors for the matrix polymer can be used, as they are, or in the form of an aqueous solution thereof which can be converted to the matrix polymer by emulsion polymerization.

Preference is given, e.g, when a nylon is used as the matrix polymer, to the use of either the monomer of said polymer (like ε-caprolactam when using nylon 6 as the final matrix material), or to the use of a salt of adipic acid and hexamethylene diamine, or diaminobutane, when nylon 6,6 or nylon 4,6 as the matrix material is aimed at. The skilled man is aware of the precursor(s) needed for the matrix polymer. Particular preference is given to the use of precursor(s) of a polyamide or a polystyrene based polymer. Step (B) is generally carried out in a temperature range of from 10°C to 150°C.

The pressure is generally atmospheric, but may be increased in order to accommodate for processability in this or in the following step (C). The residence time is not critical, and generally does not exceed one hour. Although both thermoset polymers as well as thermoplastic or rubber modified thermoplastic polymers can be used as the matrix of the CNT reinforced polymer, preference is given to the use of a (semi-)crystalline or amorphous thermoplastic or rubber modified thermoplastic polymer.

The mixture obtained in process step (B) is treated to remove (substantially all of the) water. There are different physical methods available to the skilled man to achieve this removal. Preference is given to performing step (C) by means of evaporation, freeze-drying, or flash-drying.

In step (D), the matrix polymer is either formed from one or more precursors in the presence of the dispersed CNTs, or the already formed matrix polymer and the dispersed CNTs are heated to a temperature where the matrix polymer flows.

In the first case, the matrix polymer is a thermoset polymer and the temperature is chosen thus that the matrix polymer is formed from its precursors. In this case step (E), processing or solidifying of the CNT reinforced polymer, is preferably carried out simultaneously with step (D).

In the second case, where the matrix polymer is a thermoplastic, or rubber modified thermoplastic polymer, the temperature is preferably chosen such that it is 10 to 100°C above the melting point (in case of a (semi)-crystalline matrix polymer) or the glass point (in case of an amorphous matrix polymer).

The general process conditions for step (D) depend largely on the nature of the matrix polymer and are well known to those skilled in the art.

In a preferred embodiment, where the salt of the amphiphilic polymer is the ammonium salt of an alternating styrene maleic anhydride (SMA) copolymer, the ammonium salt is decomposed in step (D) to form an amide, and upon further heating to temperatures of 100°C and higher an imide.

As a result of step (D), a CNT reinforced polymer is formed where the CNTs are well dispersed in the polymer, "well dispersed" meaning that the CNTs are substantially homogeneously distributed (i.e., allowing for a 1 to 20 percent, preferably 1 to 5 percent inhomogeniety in certain regions of the matrix) in the matrix without phase separation. Preferably, a majority of the well dispersed CNTs are not bundled together. Preferably, about 60%, more preferably about 80%, most preferably about 90% of the well-dispersed CNTs are not bundled together.

Step (E) is the processing and/or solidification of the product of step (D) in a desired form. Step (E) can be a molding step, a pelletizing step, an injection or compression molding step, or any known step to form a solidified polymer object.

The process of the invention results in a CNT reinforced polymer, wherein the properties of the CNTs used are retained to a large extent: the CNTs are hardly or not damaged, as a result of which they retain their original length as well as their original aspect ratio (AR) (ratio of length to diameter of the CNTS). The CNTs are essentially individually dispersed in the polymer matrix. The polymer therefore has improved stiffness as well as better conductivity properties.

With the process of the invention, polymer composites are obtainable having a conductivity percolation threshold at or below 0.4 wt.%, preferably below 0.2 wt.%, more preferred between 0.001 wt.% and 0.1 wt.%. In particular, the process of the invention results in a product that has a resistivity of less than 10⁶ Ω/cm at a CNT content of less than 0.1 %.

The CNT reinforced polymer according to the invention generally has a Relative Size Dimension (RSD) of the nanotubes incorporated therein of between 0.85 and 1.0, wherein the RSD is the ratio between the AR of the nanotubes in the reinforced polymer, and the AR of the virgin nanotubes (the CNTs used as starting material). Preferably, the CNT reinforced polymer of the present invention has an RSD of at least 0.9.

The reinforced polymer of the present invention can be used for several applications in which the improved stiffness, glass transition temperature and conductivity properties can be exploited. Reference can be given to shielding applications (like electromagnetic interference shielding); high modulus conducting body panels for the automotive industry with a better surface appearance than glass fiber filled polymers; nano-eletric devices (such as thin-film transistors), and others.

The invention is illustrated by the following non-limiting examples.

### Examples

The following abbreviations are used:
- AB:: polybutadiene latex grafted with styrene/acrylonitrile
- CNT:: carbon nanotube
- DSC:: Differential Scanning Calorimetry
- GA:: gum Arabicum
- PS:: polystyrene
- SAN:: styrene/acrylonitrile
- SDS:: sodium dodecyl sulphate
- SMA:: styrene/maleic anhydride
- SWCNT:: single wall carbon nanotubes

### Used materials

SWCNT were obtained from Carbon Nanotechnologies Inc (Houston, USA), Tradename HiPCO^{®} and from CarboLex, Inc. Lexington, KY, U.S.A., Tradename Carbolex^{®}. SWCNTs were used as received. Gum Arabicum (GA) was obtained from Aldrich and used as received. Sodium dodecyl sulphate (SDS) was obtained from MERCK and used as received. Styrene maleic anhydride (SMA) copolymer was obtained from Acros. Grade Acros 17925-2500, styrene content = 50%, Mw = 50 kg/mol was used. Polystyrene (PS) latex was prepared by emulsion polymerization. Styrene/Acrylonitrile (SAN) latex was prepared in emulsion polymerization. Polybutadiene latex grafted with styrene/acrylonitrile (ABS) was also prepared by emulsion polymerization.

### Preparation of the PS latex

233 g water containing 1 g of emulsifier (sodium dodecyl sulfate) and 0.5 g initiator (potassium peroxidisulfate) was heated to 68°C. 100 g of styrene was then added over a period of 190 minutes, the temperature being raised to 77°C after over half of the time. On completion of the addition of monomer, the polymerization was continued for 120 minutes. The resultant polymer dispersion, with an almost monodisperse particle size distribution, had a mean particle size d₅₀ of 75 nm.

The molecular weight Mw was 400 kg/mol.

### Preparation of the SAN latex

233 g water containing 1 g of emulsifier (sodium dodecyl sulfate) and 0.5 g initiator (potassium peroxidisulfate) was heated to 68°C. A mixture of 24 g of acrylonitrile, 76 g of styrene and 0.46 g chain transfer agent (t-dodecylmercaptane) was then added over a period of 190 minutes, the temperature being raised to 77°C after over half of the time. On completion of the addition of monomer, the polymerization was continued for 120 minutes. The resultant polymer dispersion, with an almost monodisperse particle size distribution, had a mean particle size d₅₀ of 66 nm.

The molecular weight Mw was 78 kg/mol.

### Preparation of the ABS latex

150 g of a monodisperse polybutadiene latex (solid content 40%, d₅₀ = 100 nm) was agglomerated with 15 g agglomerating dispersion (copolymer of ethyl acrylate acryl amide 96/4, solid content 10%) at a temperature of 68°C. Then 0.6 g emulsifier (potassium stearate) and 0.08 g initiator (potassium peroxidisulfate) were added. Water was added in an amount to set the total solid content of the dispersion after completion of the polymerisation to a theoretical value of 40%. A mixture of 8 g of acrylonitrile and 32 g of styrene was then added over a period of 190 minutes, the temperature being raised to 77°C after over half of the time. On completion of the addition of monomer, 0.08 g initiator (potassium peroxidisulfate) was again added and the polymerization was continued for 60 minutes.

The resultant graft polymer dispersion, which had bimodal particle size distribution, had a mean particle size d₅₀ of 325 nm and a second maximum of 425 nm.

### Preparation of the ammonium salt of the SMA polymer

50 g finely grinded SMA copolymer (Acros 17925 - 2500) was dispersed in 411 g water. After 5 minutes, 42 ml of 25% ammonia solution was added. The mixture was heated for 3 hours to 60°C and 1 hour to 80°C. After cooling down, the mixture was filtered. The solution had a solid content of 11.1 %.

### Measurements carried out

### Conductivity measurements

The visually homogeneous polymer/SWCNT nanocomposites were submitted to an electrical resistivity measurement. Room temperature electrical conductivity measurements were carried out using a standard 2 points configuration DC-Conductivity Keithly Electrometer.

### DSC measurements

The DSC measurement was carried out from -100 to 150°C with a heating rate of 20°C per minute. The DSC was determined from the second heating curve.

### Particle size and particle size distribution

The mean particle size d stated is the weight average of the particle size, as determined with an analytical ultracentrifuge following the method of W. Machtle, S. Harding (Eds.), AUC in Biochemistry and Polymer Science, Royal Society of Chemistry Cambridge, UK 1992 pp. 1447-1475. The ultracentrifuge readings give the integral mass distribution of the particle diameter in a sample. This makes it possible to determine what percentage by weight of the particles has a diameter equal to or smaller than a specific size.

The weight-average particle diameter d₅₀ indicates that particle diameter at which 50% by weight of all particles have a larger particle diameter and 50% by weight have a smaller particle diameter.

The invention is illustrated by the following non-limiting examples and comparative experiments.

### Comparative Example 1

An aqueous product of CNT and gum Arabicum was prepared according to the teachings of WO 02/076888. Gum Arabicum was dissolved in water at room temperature to form a solution. A powder of single wall nanotubes (e.g. Carbolex AP grade) which contains a bundled network of ropes, was sonicated at very mild conditions (50W, 43 KHz) for 15-20 minutes in the polymeric solution (concentration 3 wt.%, SWCNT to GA ratio 1:1). A black, homogeneous ink-like product was obtained, and mixed with a polystyrene (PS) latex. The mixture was then freeze dried (Christ alpha 2-4) overnight and the dry powder was compression molded at 160°C for 4 minutes at 10 Mpa (after 4 cycles of degassing).

### Comparative Example 2

Comparative Example 1 was repeated using an aqueous dispersion having 0.8 wt.% SWCNT and 0.8% sodium dodecylsulfate (SDS) (resulting in a 1:1 wt. ratio between the SWCNT and the SDS). In table the results of the resistivity measurements are given, using the graft polymer (ABS).

### Examples 1-5

Example 1 was repeated now using aqueous dispersions having variable amounts of SWCNTs and ammonium salt of Acros SMA with 50% polystyrene. The ratio between the SWCNTs and the ammonium salt of the SMA copolymer was kept at 1:1.

In Table I, the results of the resistivity measurements are given, using polystyrene co acrylonitrile polymer (SAN), the graft polymer (ABS) and a mixture of SAN and ABS latex (ratio 1:1 wt.%) as the matrix.

### Comparative Example 3

Comparative Example 1 was repeated but no SWCNT and polymeric surfactant were added.

**Table I**

| Example | SWCNT (wt.%) | Emulsifier | Matrix | Log Resistivity Ω.cm |
|---|---|---|---|---|
| Comp. Ex. 1 | 3 | GA | PS | 7,5 |
| Comp. Ex. 2 | 0,8 | SDS | ABS | 6,2 |
| 1 | 0,4 | SMA | ABS | 3,48 |
| 2 | 0,4 | SMA | SAN | 3,43 |
| 3 | 1,0 | SMA | SAN/ABS | 2,14 |
| 4 | 0,4 | SMA | SAN/ABS | 2,45 |
| 5 | 0,1 | SMA | SAN/ABS | 4,17 |
| Comp. Ex. 3 | 0 | None | SAN/ABS | nc |

| | | | | |
|---|---|---|---|---|
| nc = not conductive | | | | |

The examples show significantly lower log resistivity values for the polymers according to the invention.

In Table II, the results of the DSC measurements are given for the use of different dispersion agents, using SAN as the matrix.

The samples were prepared according to the method described for Comparative Example 1. The ratio between the SWCNT and the emulsifier was 1:1.

**Table II**

| Example | SWCNT (wt.%) | Emulsifier | Matrix | DSC Temp. °C |
|---|---|---|---|---|
| Comp. Ex. 4 | - | - | SAN | 103 |
| Comp. Ex. 5 | 0,4 | SDS | SAN | 100 |
| 6 | 0,4 | SMA | SAN | 112 |

The polymer according to the invention shows a significantly higher DSC temperature.

## Claims

1. A process for the preparation of a carbon nanotube (CNT) reinforced polymer, comprising the steps of
A. contacting CNTs in an aqueous medium with a water soluble salt of an amphiphilic polymer,
B. mixing the dispersion obtained in step (A) with a matrix aqueous polymer latex or one or more water soluble precursor of a matrix aqueous polymer latex,
C. removing water from the mixture obtained in step (B),
D. heating the product obtained in step (C) to a temperature at which the matrix polymer flows or where the matrix polymer is formed out of its precursors, and, optionally,
E. processing and/or solidifying the product of step (D) in a desired form.

2. The process as claimed in claim 1, wherein single wall CNTs -(SWCNTs) are used as CNTs.

3. The process as claimed in claim 1 or 2, where the amphiphilic polymer is a synthetic polymer obtained from hydrophilic and hydrophobic monomers.

4. The process as claimed in one of claims 1 to 3, where the hydrophobic block of the amphiphilic polymer (A) is made from vinyl aromatic monomers from the group consisting of styrene, styrene derivatives of formula (I), 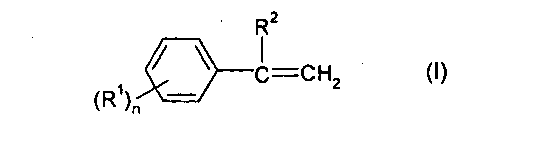 where R¹ and R² are independently H or C₁-C₈-alkyl and n is 0, 1 or 2, C₁-C₁₀-alkylacrylates, C₁-C₁₀-alkyl methacrylates, hydroxyethyl acrylates, aromatic acrylates, aromatic methacrylates, araliphatic acrylates and araliphatic methacrylates.

5. The process as claimed in one of claims 1 to 4, where the hydrophilic block of the amphiphilic polymer (A) is made from acrylic acid, methacrylic acid, dicarboxylic acids and the anhydrides of these acids.

6. The process as claimed in claim 5, where the anhydride is maleic anhydride.

7. The process as claimed in one of claims 1 to 6, where the amphiphilic polymer (A) is partly or homogeneously miscible with the matrix polymer (B).

8. The process as claimed in one of claims 1 to 7, where the salt of the amphiphilic polymer (A) is an ammonium salt.

9. The process as claimed in claim 8, where the salt of the amphiphilic polymer (A) is the ammonium salt of a styrene maleic anhydride copolymer.

10. The process as claimed in one of claims 1 to 9, where the matrix polymer (B) is from the group consisting of polyacrylates, styrene-based (co-)polymers, butadiene-based (co-)polymers, polycarbonate, acrylonitrile-based (co- )polymers, (halogen-containing) polyolefins, and polyamides.

11. The process as claimed in claim 10, where the matrix polymer (B) is made from one or more precursors of a polyamide or a polystyrene based polymer.

12. The process as claimed in one of claims 1 to 11, where the matrix polymer (B) is a (semi-)crystalline or amorphous thermoplastic polymer.

13. The process as claimed in one of claims 1 to 12, where the matrix polymer (B) is a polymer blend.

## Patentansprüche

1. Verfahren zur Herstellung eines durch Kohlenstoffnanoröhren (CNT) verstärkten Polymers, bei dem man
A. CNT in einem wäßrigen Medium mit einem wasserlöslichen Salz eines amphiphilen Polymers in Berührung bringt,
B. die in Schritt (A) erhaltene Dispersion mit einem wäßrigen Matrixpolymerlatex oder einem oder mehreren wasserlöslichen Vorläufern eines wäßrigen Matrixpolymerlatex mischt,
C. aus der in (B) erhaltenen Mischung Wasser entfernt,
D. das in (C) erhaltene Produkt auf eine Temperatur erhitzt, bei der das Matrixpolymer fließt oder das Matrixpolymer aus seinen Vorläufern gebildet wird, und gegebenenfalls
E. das Produkt aus Schritt (D) in einer gewünschten Form verarbeitet und/oder verfestigt.

2. Verfahren nach Anspruch 1, bei dem man als CNT einwandige CNT verwendet.

3. Verfahren nach Anspruch 1 oder 2, bei dem es sich bei dem amphiphilen Polymer um ein aus hydrophilen und hydrophoben Monomeren erhaltenes synthetisches Polymer handelt.

4. Verfahren nach einem der Ansprüche 1 bis 3, bei dem der hydrophobe Block des amphiphilen Polymers (A) aus vinylaromatischen Monomeren aus der Gruppe bestehend aus Styrol, Styrolderivaten der Formel (I), 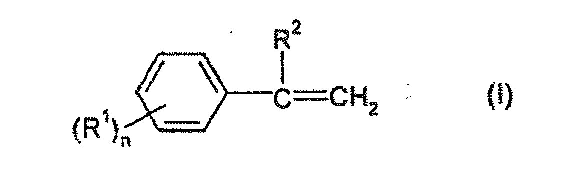 wobei R¹ und R² unabhängig voneinander für H oder C₁-C₈-Alkyl stehen und n für 0, 1 oder 2 steht, C₁-C₁₀-Alkylacrylaten, C₁-C₁₀-Alkylmethacrylaten, Hydroxyethylacrylaten, aromatischen Acrylaten, aromatischen Methacrylaten, araliphatischen Acrylaten und araliphatischen Methacrylaten besteht.

5. Verfahren nach einem der Ansprüche 1 bis 4, bei dem der hydrophile Block des amphiphilen Polymers (A) aus Acrylsäure, Methacrylsäure, Dicarbonsäuren und den Anhydriden dieser Säuren besteht.

6. Verfahren nach Anspruch 5, bei dem es sich bei dem Anhydrid um Maleinsäureanhydrid handelt.

7. Verfahren nach einem der Ansprüche 1 bis 6, bei dem das amphiphile Polymer (A) teilweise oder homogen mit dem Matrixpolymer (B) mischbar ist.

8. Verfahren nach einem der Ansprüche 1 bis 7, bei dem es sich bei dem Salz des amphiphilen Polymers (A) um ein Ammoniumsalz handelt.

9. Verfahren nach Anspruch 8, bei dem es sich bei dem Salz des amphiphilen Polymers (A) um das Ammoniumsalz eines Styrol-Maleinsäureanhydrid-Copolymers handelt.

10. Verfahren nach einem der Ansprüche 1 bis 9, bei dem das Matrixpolymer (B) aus der Gruppe bestehend aus Polyacrylaten, auf Styrol basierenden (Co-)Polymeren, auf Butadien basierenden (Co-)Polymeren, Polycarbonat, auf Acrylnitril basierenden (Co-)Polymeren, (halogenhaltigen) Polyolefinen und Polyamiden stammt.

11. Verfahren nach Anspruch 10, bei dem das Matrixpolymer (B) aus einem oder mehreren Vorläufern eines Polyamids oder eines auf Polystyrol basierenden Polymers besteht.

12. Verfahren nach einem der Ansprüche 1 bis 11, bei dem es sich bei dem Matrixpolymer (B) um ein (teil-)kristallines oder amorphes thermoplastisches Polymer handelt.

13. Verfahren nach einem der Ansprüche 1 bis 12, bei dem es sich bei dem Matrixpolymer (B) um eine Polymermischung handelt.

## Revendications

1. Procédé pour la préparation d'un polymère renforcé par des nanotubes de carbone (CNT), comprenant les étapes consistant à
A. mettre en contact des CNT dans un milieu aqueux avec un sel hydrosoluble d'un polymère amphiphile,
B. mélanger la dispersion obtenue dans l'étape (A) avec un latex aqueux de polymère matrice ou un ou plusieurs précurseurs hydrosolubles d'un latex aqueux de polymère matrice,
C. enlever l'eau du mélange obtenu dans l'étape (B),
D. chauffer le produit obtenu dans l'étape (C) à une température à laquelle le polymère matrice s'écoule ou où le polymère matrice est formé à partir de ses précurseurs et, facultativement,
E. transformer et/ou solidifier le produit de l'étape (D) en une forme souhaitée.

2. Procédé selon la revendication 1, dans lequel des CNT monofeuillets (SWCNT) sont utilisés comme CNT.

3. Procédé selon la revendication 1 ou 2, dans lequel le polymère amphiphile est un polymère synthétique obtenu à partir de monomères hydrophiles et hydrophobes.

4. Procédé selon l'une des revendications 1 à 3, dans lequel la séquence hydrophobe du polymère amphiphile (A) est formée à partir de monomères vinyliques aromatiques provenant du groupe constitué par le styrène, les dérivés du styrène de formule (I), 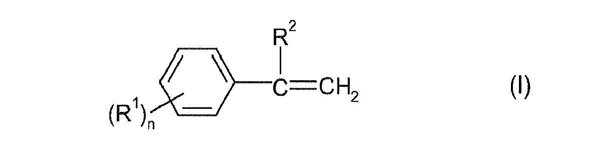 dans laquelle R¹ et R² sont indépendamment H ou un alkyle en C₁-C₈ et n vaut 0, 1 ou 2, les acrylates d'alkyle en C₁-C₁₀, les méthacrylates d'alkyle en C₁-C₁₀, les acrylates d'hydroxyéthyle, les acrylates aromatiques, les méthacrylates aromatiques, les acrylates araliphatiques et les méthacrylates araliphatiques.

5. Procédé selon l'une des revendications 1 à 4, dans lequel la séquence hydrophile du polymère amphiphile (A) est formée à partir d'acide acrylique, d'acide méthacrylique, d'acides dicarboxyliques et des anhydrides de ces acides.

6. Procédé selon la revendication 5, dans lequel l'anhydride est l'anhydride maléique.

7. Procédé selon l'une des revendications 1 à 6, dans lequel le polymère amphiphile (A) est miscible en partie ou de façon homogène avec le polymère matrice (B).

8. Procédé selon l'une des revendications 1 à 7, dans lequel le sel du polymère amphiphile (A) est un sel d'ammonium.

9. Procédé selon la revendication 8, dans lequel le sel du polymère amphiphile (A) est le sel d'ammonium d'un copolymère de styrène-anhydride maléique.

10. Procédé selon l'une des revendications 1 à 9, dans lequel le polymère matrice (B) provient du groupe constitué par les polyacrylates, les (co)polymères à base de styrène, les (co)polymères à base de butadiène, le polycarbonate, les (co)polymères à base d'acrylonitrile, les polyoléfines (halogénées) et les polyamides.

11. Procédé selon la revendication 10, dans lequel le polymère matrice (B) est formé à partir d'un ou plusieurs précurseurs d'un polyamide ou d'un polymère à base de polystyrène.

12. Procédé selon l'une des revendications 1 à 11, dans lequel le polymère matrice (B) est un polymère thermoplastique (semi-)cristallin ou amorphe.

13. Procédé selon l'une des revendications 1 à 12, dans lequel le polymère matrice (B) est un mélange de polymères.
